# EUROPÄISCHE PATENTSCHRIFT

(11) **EP 3 569 537 B1**
(45) Veröffentlichungstag und Bekanntmachung des Hinweises auf die Patenterteilung: **28.06.2023**
(21) Anmeldenummer: 18173096.1
(22) Anmeldetag: 18.05.2018
(51) Int. Cl.: B65H 54/10, B65H 59/38, H01M 10/04, H01F 41/094

(54) **VERFAHREN ZUM WICKELN EINES WICKELGUTES**
METHOD FOR WINDING OF A COILED ITEM
PROCÉDÉ D'ENROULEMENT D'UN PRODUIT À ENROULER

(43) Veröffentlichungstag der Anmeldung: 20.11.2019
(73) Patentinhaber: Siemens Aktiengesellschaft, 80333 München (DE)
(72) Erfinder: Kerling, Sebastian, 91052 Erlangen (DE); Seelinger, Björn, 91315 Höchstadt (DE)
(74) Vertreter: Siemens Patent Attorneys

(56) Entgegenhaltungen:
- EP-A1- 2 485 227
- EP-A1- 3 333 106
- WO-A1-2018/029129
- US-A1- 2016 036 086

## Beschreibung

Die vorliegende Erfindung betrifft ein Verfahren zum Wickeln eines Wickelgutes von einer Versorgungsvorrichtung auf einen Wickelkörper mit nicht-kreisförmigem Querschnitt.

Beim Wickeln eines Wickelgutes, insbesondere bei einem Draht oder einer Folie, auf einen Wickelkörper wird auf das Wickelgut regelmäßig eine Wickelspannung beaufschlagt. Die Wickelspannung entspricht hierbei der Kraft (pro Querschnittfläche), mit der das Wickelgut auf den Wickelkörper gewickelt wird. In modernen Vorrichtungen zum Wickeln eines Wickelgutes kann die Wickelspannung eingestellt werden. Mit anderen Worten ist die Wickelspannung die Zugspannung des Wickelgutes. EP 2 485 227 A1 beschreibt eine Drahtwickelmaschine und eine Regelung für eine solche Drahtwickelmaschine.

In der Anmeldung EP 3 333 106 A1 der Anmelderin wird ein Verfahren zum Wickeln eines Wickelgutes von einer Versorgungsvorrichtung auf einen Wickelkörper mit nicht-kreisförmigem Querschnitt beschrieben, bei welchem das Wickelgut von der Versorgungsvorrichtung bereitgestellt wird und auf den Wickelkörper aufgewickelt wird, wobei die Wickelspannung des Wickelgutes auf eine vorgesehene Wickelspannung einstellbar ist, wobei zur Einstellung der Wickelspannung eine Drehgeschwindigkeit des Wickelkörpers gesteuert oder geregelt wird, und/oder die Wickelspannung durch eine Einstelleinheit auf die vorgesehene Wickelspannung eingestellt wird.

Die Anmeldung US 2016/0036086 A1 betrifft einen Herstellungsapparat für Akkubatterien mit Wickeldorn und einer Steuerung eingerichtet zur Steuerung einer Fördermenge von bereitgestelltem Ausgangsmaterial und einer Umdrehung des Wickeldorns, wobei die Steuerung ein Profil der zu fördernden Menge an Ausgangsmaterial im Bezug auf die Umdrehungsgeschwindigkeit des Wickeldorns gespeichert hat und eingerichtet ist, basierend auf dem Profil die Fördermenge und die Umdrehung des Wickeldorns synchron zu steuern.

Die internationale Anmeldung WO 2018/029129 A1 betrifft eine Wickelvorrichtung zur Herstellung von Flachwickeln, wobei die Wickelvorrichtung mindestens eine Steuereinrichtung, mindestens eine Materialzuführeinrichtung und einen Aufwickelkern umfasst, wobei die Wickelvorrichtung mindestens eine Positioniereinrichtung für den Aufwickelkern umfasst, wobei der Aufwickelkern mittels der Positioniereinrichtung mit einer Translationsbewegung bewegbar ist, sowie ein Verfahren zur Herstellung von Flachwickeln. Es kann ein Bewegungsprofil der Translationsbewegung und gegebenenfalls auch ein Bewegungsprofil der Rotationsbewegung kann hierbei derart eingestellt werden, dass eine Materialaufnahmegeschwindigkeit des Materials konstant ist oder sich nicht mehr als ein vorbestimmtes Maß ändert.

Vor diesem Hintergrund besteht eine Aufgabe der vorliegenden Erfindung darin, das Wickeln eines Wickelgutes auf einen Wickelkörper mit nicht-kreisförmigem Querschnitt zu verbessern.

Gemäß einem ersten Aspekt wird ein Verfahren zum Wickeln eines Wickelgutes von einer Versorgungsvorrichtung auf einen Wickelkörper mit nicht-kreisförmigem Querschnitt einer Wickelmaschine vorgeschlagen. Das Verfahren umfasst die folgenden Schritte:
Bereitstellen des Wickelgutes von der Versorgungsrolle, und
Aufwickeln des von der Versorgungsvorrichtung bereitgestellten Wickelgutes über zumindest eine Umlenkrolle auf den Wickelkörper , wobei eine Ist-Wickelspannung des Wickelgutes auf eine Soll-Wickelspannung in Abhängigkeit eines in einer Speichereinheit gespeicherten positionsabhängigen Kompensationssignals zur Kompensation einer aufgrund des nicht-kreisförmigen Querschnitts des Wickelgutes veränderlichen freien Länge des Wickelgutes zwischen der Umlenkrolle und dem Wickelkörper eingestellt wird.

Dadurch, dass die Ist-Wickelspannung auf die Soll-Wickelspannung mittels des positionsabhängigen Kompensationssignals, welches in der Speichereinheit schon vorab dem Aufwickeln gespeichert ist, eingestellt wird, kann die Rechenlast für das Einstellen verringert werden, insbesondere gegenüber Lösungen, bei denen das Kompensationssignal während des Aufwickelns, also online, berechnet wird. Durch die verringerte Rechenlast kann auch die Steuereinrichtung, welche die Einstellung der Ist-Wickelspannung vornimmt, entsprechend angepasst oder gewählt werden. Insbesondere gegenüber Lösungen, bei denen das Kompensationssignal während des Aufwickelns berechnet wird, kann eine Steuereinrichtung mit geringeren Rechenkapazitäten verwendet werden. Dies spart vorteilhafterweise Kosten ein.

Bei der Verwendung einer gleichen Steuereinrichtung können vorteilhafterweise die Zykluszeiten verringert werden.

Das positionsabhängige Kompensationssignal wird demnach insbesondere vorab für einen Gesamtwickelvorgang oder für einen Teilwickelvorgang berechnet und in der Speichereinheit abgelegt. Insbesondere wird das berechnete Kompensationssignal in einer Tabelle oder Polynomtabelle, auch Kurvenscheibe genannt, abgelegt.

Durch das vorliegende Verfahren kann vorteilhafterweise die Prozessgeschwindigkeit bei einer bestehenden Mechanik der Wickelmaschine erhöht werden. Des Weiteren kann auch die Prozessgüte bei bestehender Mechanik der Wickelmaschine durch das vorliegende Verfahren erhöht werden.

Als freie Länge des Wickelgutes wird insbesondere die Bahnlänge des Wickelgutes zwischen der Umlenkrolle und dem Wickelkörper bezeichnet. Bei mehreren in der Wickelmaschine vorgesehenen Umlenkrollen ist insbesondere die dem Wickelkörper unmittelbar vorgeschaltete Umlenkrolle gemeint. Beispielsweise ist die freie Länge des Wickelgutes die Bahnlänge zwischen dem Auflagepunkt des Wickelgutes auf der Umlenkrolle und dem Auflagepunkt des Wickelgutes auf dem Wickelkörper.

Unter der Wickelspannung wird die Spannung, insbesondere die mechanische Spannung, des Wickelgutes beim Aufwickeln verstanden. Insbesondere ist die Wickelspannung definiert als die Kraft, welche auf das Wickelgut senkrecht zu seiner Querschnittfläche wirkt, dividiert durch die Querschnittfläche.

Unter der Soll-Wickelspannung wird die Wickelspannung verstanden, mit welcher das Wickelgut auf den Wickelkörper aufgewickelt werden soll. Die Soll-Wickelspannung kann auch als vorgesehene Wickelspannung bezeichnet werden. Die Soll-Wickelspannung kann als Funktion der Ausrichtung des Wickelkörpers dargestellt sein. Beispielhaft ist dies bei einer Wicklung eines Drahtes als Wickelgut um einen eckigen Wickelkörper relevant, um ein optimiertes Ergebnis zu erzielen.

Unter einem nicht-kreisförmigen Querschnitt wird ein Querschnitt verstanden, der von einer Kreisform abweicht. Das heißt, das Wickelgut hat einen nicht-konstanten Durchmesser, d.h. zumindest zwei unterschiedliche Durchmesser. Beispielhaft ist ein solcher Wickelkörper mit nicht-kreisförmigen Querschnitt ellipsenförmig oder rechteckig geformt.

Beispielsweise werden mit dem vorliegenden Verfahren vorzugsweise Batteriezellen oder Folienkondensatoren erzeugt. Unter einer Versorgungsvorrichtung wird insbesondere eine Einrichtung zur Bereitstellung und/oder Aufbewahrung des Wickelgutes in der Wickelmaschine verstanden. Die Versorgungsvorrichtung umfasst vorzugsweise eine Versorgungsrolle und/oder eine Transportvorrichtung.

Beispielhaft ist die Versorgungsrolle eine Drahtrolle oder eine Rolle, auf welcher Folie aufgerollt ist. Dem Wickelkörper kann eine erste Drehgeschwindigkeit zugeordnet sein, wohingegen der Versorgungsrolle eine zweite Drehgeschwindigkeit zugeordnet werden kann, so dass die Versorgungsrolle das Wickelgut mit einer zu der zweiten Drehgeschwindigkeit proportionalen Geschwindigkeit bereitstellt. Bei der Umlenkrolle ist bevorzugt diejenige Umlenkrolle gemeint, von der aus das Wickelgut zum Wickelkörper geführt wird.

Die Wickelspannung kann auch als Bahnspannung oder Wickelgutspannung bezeichnet werden. Bei einem Wickelvorgang auf den Wickelkörper mit nicht-kreisrundem Querschnitt verändert sich der Abschnitt zwischen dem Auflagepunkt des Wickelgutes auf dem Wickelkörper und dem Auflagepunkt des Wickelgutes auf der vorgeschalteten Umlenkrolle bei Rotation des Wickelkörpers. Diese Veränderung ist, wie vorliegend, als veränderliche freie Länge des Wickelgutes zwischen der Umlenkrolle und dem Wickelkörper bezeichnet. Die Veränderung dieses Abstandes zwischen den Auflagepunkten hat eine Veränderung der Ist-Wickel-spannung zur Folge, auch aufgrund dessen wird durch das vorliegende Verfahren die Ist-Wickelspannung auf die Soll-Wickel-spannung eingestellt. Unter Einstellen ist vorliegend insbesondere ein Steuern oder ein Regeln gemeint. Zusätzlich hat der wechselnde Auflagepunkt auf der Umlenkrolle und der nicht konstante Umfang des Aufwicklers (über 360° im Vergleich zu einem Kreis) einen Einfluss auf die Änderung der Ist-Wickelspannung.

Vorzugsweise ist die Ist-Wickelspannung konstant, insbesondere während eines Wickelzyklus aus N Umdrehungen des Wickelkörpers. Die Ist-Wickelspannung ist vorzugsweise bei einer Batteriezellenfertigung und der Wicklung von Kondensatoren konstant zu halten. Unter "konstant" ist hierbei insbesondere zu verstehen, dass die Wickelspannung, insbesondere an dem Auflagepunkt des Wickelgutes, auf dem (insbesondere bereits bewickelten) Wickelkörper während des Wickelvorgangs gleichbleibt.

Insbesondere steuert oder regelt hierzu eine Steuereinrichtung der Wickelmaschine eine Einstelleinheit und/oder einen Antrieb des Wickelkörpers. Die Einstelleinheit umfasst beispielsweise einen variablen Wickelgutspeicher und/oder eine einstellbare Wickelgutbremse und/oder eine Tänzerrolle. Beispiele für eine solche Einstelleinheit sind in der EP 3 333 106 A1

Gemäß einer Ausführungsform wird die Ist-Wickelspannung des Wickelgutes auf die Soll-Wickelspannung in Abhängigkeit des positionsabhängigen Kompensationssignals zur Kompensation der veränderlichen freien Länge des Wickelgutes zwischen der Umlenkrolle und dem Wickelkörper geregelt.

Gemäß der Erfindung wird das positionsabhängige Kompensationssignal in Abhängigkeit von einer jeweiligen ermittelten Position des Wickelkörpers für einen simulierten Wickelzyklus aus N Umdrehungen des Wickelkörpers vor dem Aufwickeln des Wickelgutes auf den Wickelkörper berechnet und in einer Tabelle der Speichereinheit gespeichert.

Das Kompensationssignal wird vorab, mittels einer Simulation basierend auf einem simulierten Wickelzyklus aus N Umdrehungen des Wickelkörpers, berechnet und anschließend in der Tabelle der Speichereinheit gespeichert. Das Berechnen des Kompensationssignals und das Speichern in der Tabelle der Speichereinheit finden vor dem tatsächlichen Aufwickeln des Wickelgutes auf den Wickelkörper statt.

Gemäß einer weiteren Ausführungsform wird als Tabelle zum Speichern des positionsabhängigen Kompensationssignals eine Polynom-Tabelle verwendet. Die Polynomtabelle kann auch als Kurvenscheibe bezeichnet werden.

Gemäß einer weiteren Ausführungsform wird die jeweilige Position des Wickelkörpers für den simulierten Wickelzyklus aus den N Umdrehungen des Wickelkörpers in Abhängigkeit von einer Wickellänge des Wickelgutes und einer Drehgeschwindigkeit des Wickelkörpers ermittelt.

Zur Ermittlung der jeweiligen Position des Wickelkörpers während der Simulation mit dem simulierten Wickelzyklus sind die Wickellänge und die Drehgeschwindigkeit geeignete Eingangsparameter für eine präzise Ermittlung.

Gemäß der Erfindung wird das berechnete positionsabhängige Kompensationssignal vor dem Speichern in der Tabelle mittels eines Filters einer vorbestimmten Filter-Ordnung gefiltert und das gefilterte positionsabhängige Kompensationssignal wird anschließend in der Tabelle der Speichereinheit gespeichert.

Das berechnete Kompensationssignal kann demnach so modifiziert oder gefiltert werden, dass bestimmte Frequenzspektren getilgt und somit nicht mehr angeregt werden. Hierzu eignet sich im Besonderen ein Filter hoher Ordnung mit endlicher Impulsantwort.

Hierdurch kann vorteilhafterweise die Prozessgeschwindigkeit bei einer bestehenden Mechanik der Wickelmaschine besonders erhöht werden. Außerdem kann auch die Prozessgüte bei bestehender Mechanik der Wickelmaschine durch die vorliegende Ausführungsform besonders erhöht werden.

Gemäß einer weiteren Ausführungsform wird als das Filter ein FIR-Filter (FIR; Finite Impulse Response) mit einer bestimmten Filter-Ordnung von zumindest M und einer endlichen Impulsantwort verwendet. Beispielsweise liegt die Filter-Ordnung M zwischen 1500 und 2000.

Gemäß einer weiteren Ausführungsform werden beim Speichern des gefilterten positionsabhängigen Kompensationssignals in die Tabelle ein Einschwingverhalten des Filters berücksichtigt sowie eine Filter-Totzeit des Filters kompensiert.

Durch die Vorabberechnung des Kompensationssignals können das Einschwingverhalten des Filters und die resultierende Filter-Totzeit bereits bei der Berechnung des Kompensationssignals und/oder dessen Speicherung in der Speichereinheit berücksichtigt werden. Dies wirkt sich besonders vorteilhaft bei der Verwendung von Filtern hoher Ordnung aus.

Gemäß einer weiteren Ausführungsform wird die jeweilige Position des Wickelkörpers für den simulierten Wickelzyklus aus den N Umdrehungen des Wickelkörpers in Abhängigkeit von der Wickellänge des Wickelgutes, von der Drehgeschwindigkeit des Wickelkörpers und der bestimmten Filter-Ordnung des Filters in einer vorbestimmten Auflösung ermittelt.

Gemäß einer weiteren Ausführungsform wird zum Einstellen der Ist-Wickelspannung des Wickelgutes auf die Soll-Wickelspannung eine Drehgeschwindigkeit des Wickelkörpers geregelt.

Gemäß einer weiteren Ausführungsform wird die Ist-Wickelspannung des Wickelgutes auf die Soll-Wickelspannung durch eine Einstelleinheit geregelt.

Die Einstelleinheit umfasst insbesondere eine Wickelgutbremse mit einstellbarer Bremsleistung und/oder einen Wickelgutspeicher. Die Einbringung des Zuges kann auch über ein Tänzer-System, über den Antrieb des Wicklers und/oder über den Antrieb einer beteiligten Bahnachse erfolgen. Hierbei wird das Wickelgut über eine Umlenkrolle geleitet.

Eine Wickelgutbremse kann vorteilhaft durch weitere Möglichkeiten der Einstellung der Wickelspannung ergänzt werden.

Ein Wickelgutspeicher weist eine Mehrzahl von Umlenkrollen auf, wobei das Wickelgut durch die Mehrzahl von Umlenkrollen auf einer, in der Länge veränderlichen Bahn gehalten wird. Durch eine Veränderung der Position zumindest einer der Umlenkrollen ist eine Einstellung der Länge der Bahn möglich. Die Länge der Bahn des Wickelgutes entspricht der Kapazität des Wickelgutspeichers. Die Veränderung der Position der jeweiligen Umlenkrolle erfolgt insbesondere durch ein Stellglied.

Ein Wickelgutspeicher kann zum Ausgleich von leichten Schwankungen der Wickelspannung mit einer Tänzerrolle kombiniert werden.

Gemäß einer weiteren Ausführungsform wird die Ist-Wickelspannung des Wickelgutes auf die Soll-Wickelspannung in Abhängigkeit des positionsabhängigen Kompensationssignals zur Einstellung einer auf das Wickelgut wirkenden Ist-Zugkraft auf eine Soll-Zugkraft geregelt.

Gemäß einer weiteren Ausführungsform wird ein auf das Wickelgut wirkendes Ist-Moment während des Aufwickelns des Wickelgutes auf den Wickelkörper auf ein Soll-Moment eingestellt, insbesondere geregelt.

Gemäß einer weiteren Ausführungsform wird ein auf das Wickelgut wirkendes Ist-Moment auf ein Soll-Moment in Abhängigkeit des in der Speichereinheit gespeicherten positionsabhängigen Kompensationssignals zur Kompensation der aufgrund des nicht-kreisförmigen Querschnitts des Wickelgutes veränderlichen freien Länge des Wickelgutes geregelt.

Gemäß einem nicht beanspruchten zweiten Aspekt wird ein Computerprogrammprodukt vorgeschlagen, welches auf einer programmgesteuerten Einrichtung die Durchführung des wie oben erläuterten Verfahrens zum Wickeln eines Wickelgutes von einer Versorgungsvorrichtung auf einen Wickelkörper mit nicht-kreisförmigem Querschnitt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem nicht beanspruchten dritten Aspekt wird eine Steuereinrichtung für eine Wickelmaschine vorgeschlagen, wobei die Steuereinrichtung eine Regeleinheit aufweist, die dazu eingerichtet ist, mit Hilfe von Antrieben und/oder einer Einstelleinheit das wie oben erläuterte Verfahren zum Wickeln eines Wickelgutes von einer Versorgungsvorrichtung auf einen Wickelkörper mit nicht-kreisförmigem Querschnitt auszuführen.

Die Regeleinheit kann hardwaretechnisch und/oder auch softwaretechnisch implementiert sein. Bei einer hardwaretechnischen Implementierung kann die Regeleinheit als Vorrichtung oder als Teil einer Vorrichtung, zum Beispiel als Computer oder als Mikroprozessor oder als Steuerrechner ausgebildet sein. Bei einer softwaretechnischen Implementierung kann die Regeleinheit als Computerprogrammprodukt, als eine Funktion, als eine Routine, als Teil eines Programmcodes oder als ausführbares Objekt ausgebildet sein.

Gemäß einem nicht beanspruchten vierten Aspekt wird eine Wickelmaschine zum Wickeln eines Wickelgutes vorgeschlagen. Die Wickelmaschine umfasst eine Versorgungsvorrichtung zum Bereitstellen des Wickelgutes, einen Wickelkörper mit nicht-kreisförmigem Querschnitt einer Wickelmaschine und eine Steuereinrichtung, welche eine Regeleinheit aufweist, die dazu eingerichtet ist, beim Aufwickeln des von der Versorgungsvorrichtung bereitgestellten Wickelgutes über zumindest eine Umlenkrolle auf den Wickelkörper eine Ist-Wickelspannung des Wickelgutes auf eine Soll-Wickelspannung in Abhängigkeit eines in einer Speichereinheit gespeicherten positionsabhängigen Kompensationssignals zur Kompensation einer aufgrund des nicht-kreisförmigen Querschnitts des Wickelgutes veränderlichen freien Länge des Wickelgutes zwischen der Umlenkrolle und dem Wickelkörper einzustellen.

Die für das vorgeschlagene Verfahren beschriebenen Ausführungsformen und Merkmale gelten für die vorgeschlagene Steuereinrichtung sowie für die vorgeschlagene Wickelmaschine entsprechend.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht eines Ausführungsbeispiels einer Wickelmaschine;
Fig. 2 zeigt ein schematisches Ablaufdiagramm eines Ausführungsbeispiels eines Verfahrens zum Wickeln eines Wickelgutes von einer Versorgungsrolle auf einen Wickelkörper mit nicht-kreisförmigem Querschnitt;
Fig. 3 zeigt ein schematisches Blockdiagramm eines Ausführungsbeispiels eines Verfahrens zum Berechnen und Speichern eines positionsabhängigen Kompensationssignals; und
Fig. 4 zeigt ein schematisches Blockdiagramm eines Ausführungsbeispiels einer Steuereinrichtung für eine Wickelmaschine.

In den Figuren sind gleiche oder funktionsgleiche Elemente mit denselben Bezugszeichen versehen worden, sofern nichts anderes angegeben ist.

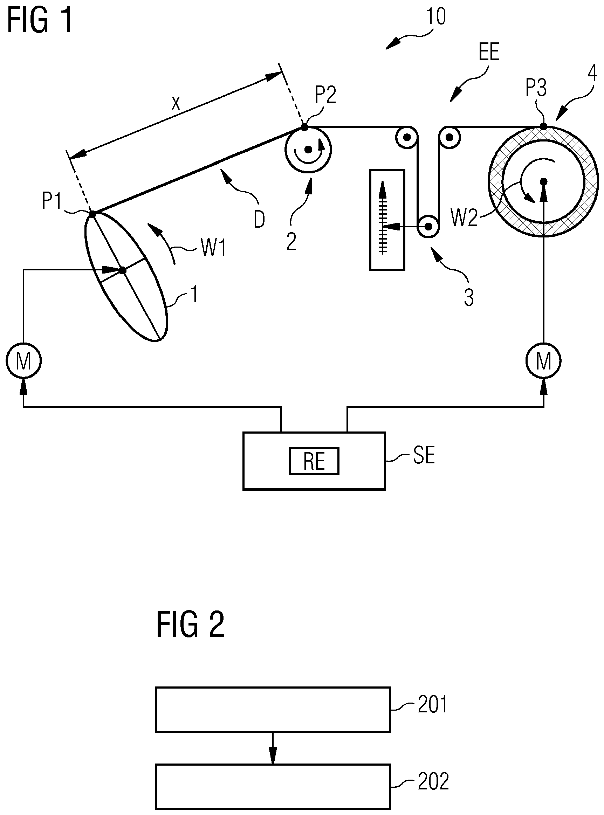

In Fig. 1 ist eine schematische Ansicht eines Ausführungsbeispiels einer Wickelmaschine 10 dargestellt.

Ferner zeigt die Fig. 2 ein schematisches Ablaufdiagramm eines Ausführungsbeispiels eines Verfahrens zum Wickeln eines Wickelgutes D von einer Versorgungsrolle 4 der Wickelmaschine 10 auf einen Wickelkörper 1 mit nicht-kreisförmigen Querschnitt. Im Folgenden werden die Fig. 1 und 2 unter Bezugnahme aufeinander erläutert:
Die Wickelmaschine 10 der Fig. 1 umfasst einen Wickelkörper 1, eine Umlenkrolle 2, einen Bahnspeicher 3 und eine Versorgungsrolle 4. Der Bahnspeicher 3 wirkt dabei als Einstelleinheit EE. Zusätzlich oder alternativ kann die Einstelleinheit EE eine Wickelgutbremse oder einen Wickelgutspeicher aufweisen.

Der Wickelkörper 1 sowie die Versorgungsrolle 4 sind über Antriebe M antreibbar. Die Antriebe M können über eine Steuereinrichtung SE gesteuert oder geregelt werden. Hierzu weist die Steuereinrichtung SE eine Regeleinheit RE auf. Insbesondere steuert oder regelt die Steuereinrichtung SE die Antriebe oder Motoren M des Wickelkörpers 1 und/oder der Versorgungsrolle 4. Der Wickelkörper 1 dreht sich beim Wickelvorgang mit einer ersten Drehgeschwindigkeit W1. Die Versorgungsrolle 4 dreht sich mit einer zweiten Drehgeschwindigkeit W2. Der Wickelkörper 1 wird mit dem Wickelgut D umwickelt. Das Wickelgut D durchläuft die Wickelmaschine 10 mit einer bestimmten Geschwindigkeit. Das Wickelgut D weist beim Wickelvorgang eine bestimmte Wickelspannung auf. Die bestimmte Wickelspannung wird mit Hilfe des Antriebs M des Wickelkörpers 1 und mit Hilfe des Antriebs M für die Versorgungsrolle 4 auf eine Soll-Wickelspannung oder vorgesehene Wickelspannung eingestellt.

Dabei wird das Wickelgut D von der Versorgungsrolle 4 über eine Umlenkrolle 2 zu dem Wickelkörper 1 geführt. Dabei wird das Wickelgut D von der Umlenkrolle 2 auf den Wickelkörper 1 gewickelt. In Fig. 1 bezeichnen hierbei P1 den Auflagepunkt des Wickelgutes D auf den Wickelkörper 1, P2 den Auflagepunkt des Wickelgutes D auf der Umlenkrolle 2 und P3 den Auflagepunkt des Wickelgutes D auf der Versorgungsrolle 4. Das Wickelgut D verlässt die Umlenkrolle 2 an dem Auflagepunkt P2. Das Wickelgut D berührt den Wickelkörper 1 an dem Auflagepunkt P1. Zwischen dem Auflagepunkt P1 und dem Auflagepunkt P2 erstreckt sich die freie Länge x. Die freie Länge x entspricht der Länge des Wickelgutes D zwischen der Umlenkrolle 2 und dem Wickelkörper 1. Die freie Länge x ändert sich während des Wickelvorgangs periodisch. Darüber hinaus ändert sich der Auflagepunkt P2 auf der Umlenkrolle 2 ebenso periodisch.

Im Folgenden nun zu dem Verfahren nach Fig. 2, welches die Verfahrensschritte 201 und 202 aufweist.

In Schritt 201 wird das Wickelgut D von der Versorgungsrolle 4 bereitgestellt (siehe Fig. 1).

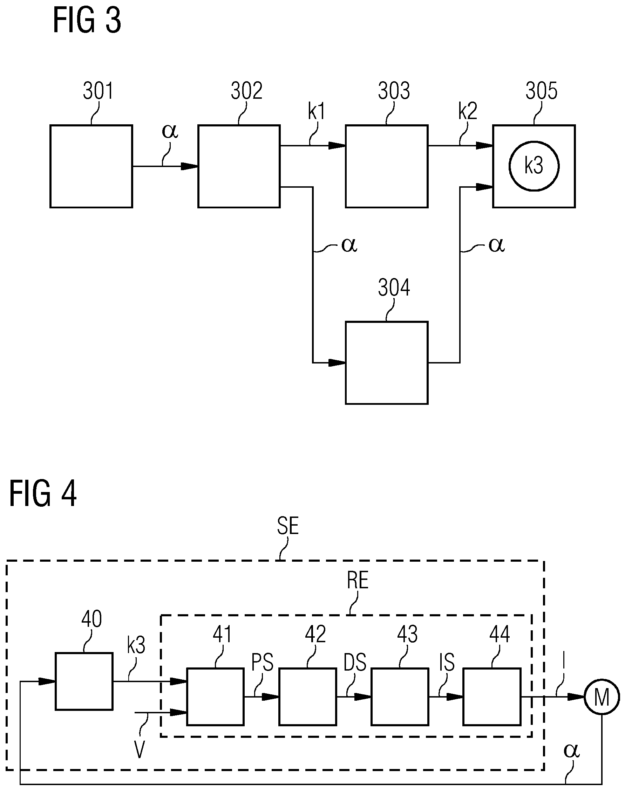

In Schritt 202 wird das von der Versorgungsrolle 4 bereitgestellte Wickelgut D über die Umlenkrolle 2 auf den Wickelkörper 1 aufgewickelt, wobei eine Ist-Wickelspannung des Wickelgutes D auf eine Soll-Wickelspannung in Abhängigkeit eines in einer Speichereinheit 40 gespeicherten positionsabhängigen Kompensationssignals k3 (siehe Fig. 3 und Fig. 4) zur Kompensation der aufgrund des nicht-kreisförmigen Querschnitts des Wickelgutes D veränderlichen freien Länge x des Wickelgutes D zwischen der Umlenkrolle 2 und dem Wickelkörper 1 eingestellt wird. Dieses Einstellen kann ein Steuern oder ein Regeln sein.

Das positionsabhängige Kompensationssignal wird in Abhängigkeit von einer jeweiligen ermittelten Position α des Wickelkörpers 1 für einen simulierten Wickelzyklus aus N Umdrehungen des Wickelkörpers 1 berechnet und anschließend in einer Tabelle der Speichereinheit gespeichert.

In Fig. 3 ist ein schematisches Blockdiagramm eines Ausführungsbeispiels eines Verfahrens zum Berechnen und Speichern eines positionsabhängigen Kompensationssignals dargestellt. In der Fig. 3 bezeichnet k1 das berechnete Kompensationssignal, k2 das gefilterte Kompensationssignals und k3 das gespeicherte Kompensationssignal.

Das Verfahren der Fig. 3 umfasst die folgenden Schritte 301 bis 305.

In Schritt 301 wird die jeweilige Position α des Wickelkörpers 1 für einen simulierten Wickelzyklus aus den N Umdrehungen des Wickelkörpers 1 in Abhängigkeit von einer Wickellänge des Wickelgutes D und einer Drehgeschwindigkeit W1 des Wickelkörpers 1 ermittelt.

Nachdem das Ausführungsbeispiel der Fig. 3 ein Filtern umfasst (siehe Schritt 304), kann die jeweilige Position α des Wickelkörpers 1 in Schritt 301 zusätzlich zu der Wickellänge des Wickelgutes D und der Drehgeschwindigkeit W1 des Wickelkörpers 1 in Abhängigkeit von der Filter-Ordnung des Filters in einer vorbestimmten Auflösung ermittelt werden. Eine Auflösung kann auch ohne Filterung eingestellt werden. Abhängig von der eingestellten Auflösung und der Filterordnung wird der simulierte Wickelzyklus vorzugsweise entsprechend angepasst.

In Schritt 302 wird das positionsabhängige Kompensationssignal k1 in Abhängigkeit von der jeweiligen ermittelten Position α des Wickelkörpers 1 vor dem Aufwickeln des Wickelgutes D auf den Wickelkörper 1 berechnet. Das positionsabhängige Kompensationssignal k1 ist eine Funktion von α.

In Schritt 303 wird das berechnete positionsabhängige Kompensationssignal k1 vor dem Speichern in der Tabelle (siehe Schritt 305) mittels eines Filters der vorbestimmten Filter-Ordnung gefiltert und das gefilterte positionsabhängige Kompensationssignal k2 wird in der Tabelle der Speichereinheit als gespeichertes Kompensationssignal k3 gespeichert. Insbesondere werden k3 und α als Wertepaare mit der bestimmten Auflösung in der Speichereinheit 40 gespeichert.

Das Filter ist insbesondere ein FIR-Filter mit der bestimmten Filterordnung von zumindest M und einer endlichen Impulsantwort.

In Schritt 304 wird die Filter-Totzeit des Filters, welches in Schritt 303 angewendet wird, für eine zeitliche Verschiebung des Signals α berücksichtigt. Somit liegen eingangsseitig in dem Schritt 305 das gefilterte Kompensationssignal k2 und das Signal α zur Position des Wickelkörpers 1 aufeinander synchronisiert an.

In Schritt 305 wird das gefilterte positionsabhängige Kompensationssignal k2, abhängig von dem Positionssignal α, in der Tabelle der Speichereinheit 40 gespeichert, wobei vorzugsweise neben der Filter-Totzeit auch das Einschwingverhalten des Filters berücksichtigt wird.

Somit liegt nach Durchführung des Schrittes 305 ein gespeichertes Kompensationssignal k3 in der Speichereinheit 40 vor, welches in der vorbestimmten Auflösung auf die Position α des Wickelkörpers 1 synchronisiert ist.

Fig. 4 zeigt ein schematisches Blockdiagramm eines Ausführungsbeispiels einer Steuereinrichtung SE für eine Wickelmaschine 10. Die Steuereinrichtung SE ist dazu eingerichtet, mit Hilfe eines Antriebes, beispielsweise des Antriebs M für den Wickelkörper 1 (siehe Fig. 1), das Verfahren nach Fig. 2 durchzuführen.

Die Steuereinrichtung SE umfasst eine Speichereinheit 40 zur Speicherung des Kompensationssignals k3 (vgl. Fig. 3) sowie eine Regeleinheit RE. Die Regeleinheit RE umfasst eine Berechnungseinheit 41, einen Positionsregler 42, einen Drehzahlregler 43 und einen Stromregler 44.

Die Berechnungseinheit 41 empfängt das aktuelle Kompensationssignal k3 von der Speichereinheit 40. "Aktuell" bezieht sich hier auf den aktuellen Wert des Signals α für die Position des Wickelkörpers. Weiterhin empfängt die Berechnungseinheit 41 eine Soll-Geschwindigkeit V für das Wickelgut. Die Soll-Geschwindigkeit V für das Wickelgut beträgt beispielsweise 10 m/min.

Ausgangsseitig stellt die Berechnungseinheit 41 einen Positions-Sollwert PS bereit. Der Positionsregler 42 empfängt den Positions-Sollwert PS und stellt ausgangsseitig einen Drehzahl-Sollwert DS bereit. Der Drehzahlregler 43 empfängt den Drehzahl-Sollwert DS und stellt ausgangsseitig einen Strom-Sollwert IS (oder einen Moment-Sollwert) in Abhängigkeit von dem Drehzahl-Sollwert DS bereit.

Der Stromregler 44 stellt ausgangsseitig einen Strom I in Abhängigkeit des Strom-Sollwerts IS bereit. Mittels des Stroms I wird der Motor M angesteuert. In Folge der Ansteuerung des Motors mittels des Stroms I ergibt sich eine aktuelle Position α des Wickelkörpers 1. Diese aktuelle Position α dient wiederum (in der gezeigten Rückkopplung der Fig. 4) als Eingangswert für die Speichereinheit 40, um ausgangsseitig ein aktualisiertes Kompensationssignal k3 bereitzustellen. Es kann auch die aktuelle Sollposition α verwendet werden, um das aktualisierte Kompensationssignal k3 zu erhalten.

## Patentansprüche

1. Verfahren zum Wickeln eines Wickelgutes (D) von einer Versorgungsvorrichtung (4) auf einen Wickelkörper (1) mit nicht-kreisförmigem Querschnitt einer Wickelmaschine (10), mit den Schritten:
Bereitstellen (201) des Wickelgutes (D) von der Versorgungsvorrichtung (4), und
Aufwickeln (202) des von der Versorgungsvorrichtung (4) bereitgestellten Wickelgutes (D) über zumindest eine Umlenkrolle (2) auf den Wickelkörper (1), wobei eine Ist-Wickelspannung des Wickelgutes (D) auf eine Soll-Wickelspannung in Abhängigkeit eines in einer Speichereinheit (40) gespeicherten positionsabhängigen Kompensationssignals (k3) zur Kompensation einer aufgrund des nicht-kreisförmigen Querschnitts des Wickelgutes (D) veränderlichen freien Länge (x) des Wickelgutes (D) zwischen der Umlenkrolle (2) und dem Wickelkörper (1) eingestellt wird,
**dadurch gekennzeichnet, dass**
das positionsabhängige Kompensationssignal (k1) in Abhängigkeit von einer jeweiligen ermittelten Position (α) des Wickelkörpers (1) für einen simulierten Wickelzyklus aus N Umdrehungen des Wickelkörpers (1) vor dem Aufwickeln des Wickelgutes (D) auf den Wickelkörper (1) berechnet wird und in einer Tabelle der Speichereinheit (40) gespeichert wird, und dass
das berechnete positionsabhängige Kompensationssignal (k1) vor dem Speichern in der Tabelle mittels eines Filters einer vorbestimmten Filter-Ordnung gefiltert wird und das gefilterte positionsabhängige Kompensationssignal (k2) in der Tabelle der Speichereinheit (40) gespeichert wird.

2. Verfahren nach Anspruch 1,
**dadurch gekennzeichnet,**
**dass** die Ist-Wickelspannung des Wickelgutes (D) auf die Soll-Wickelspannung in Abhängigkeit des positionsabhängigen Kompensationssignals (k3) zur Kompensation der veränderlichen freien Länge (x) des Wickelgutes (D) zwischen der Umlenkrolle (2) und dem Wickelkörper (1) geregelt wird.

3. Verfahren nach Anspruch 1 oder 2,
**dadurch gekennzeichnet,**
**dass** als Tabelle zum Speichern des positionsabhängigen Kompensationssignals (k3) eine Polynom-Tabelle verwendet wird.

4. Verfahren nach einem der Ansprüche 1 bis 3,
**dadurch gekennzeichnet,**
**dass** die jeweilige Position (α) des Wickelkörpers (1) für den simulierten Wickelzyklus aus den N Umdrehungen des Wickelkörpers (1) in Abhängigkeit von einer Wickellänge des Wickelgutes (D) und einer Drehgeschwindigkeit (W1) des Wickelkörpers (1) ermittelt wird.

5. Verfahren nach einem der vorhergehenden Ansprüche,
**dadurch gekennzeichnet,**
**dass** als das Filter ein FIR-Filter mit einer bestimmten Filter-Ordnung von zumindest M und einer endlichen Impulsantwort verwendet wird.

6. Verfahren nach einem der vorhergehenden Ansprüche,
**dadurch gekennzeichnet,**
**dass** die jeweilige Position (α) des Wickelkörpers (1) für den simulierten Wickelzyklus aus den N Umdrehungen des Wickelkörpers (1) in Abhängigkeit von der Wickellänge des Wickelgutes (D), von der Drehgeschwindigkeit (W1) des Wickelkörpers (1) und der bestimmten Filter-Ordnung des Filters in einer vorbestimmten Auflösung ermittelt wird.

7. Verfahren nach einem der vorhergehenden Ansprüche,
**dadurch gekennzeichnet,**
**dass** beim Speichern des gefilterten positionsabhängigen Kompensationssignals (k2) in die Tabelle ein Einschwingverhalten des Filters berücksichtigt wird sowie eine Filter-Totzeit des Filters kompensiert wird.

8. Verfahren nach einem der vorhergehenden Ansprüche,
**dadurch gekennzeichnet,**
**dass** die Ist-Wickelspannung des Wickelgutes (D) auf die Soll-Wickelspannung in Abhängigkeit des positionsabhängigen Kompensationssignals (k3) zur Einstellung einer auf das Wickelgut (D) wirkenden Ist-Zugkraft auf eine Soll-Zugkraft geregelt wird.

9. Verfahren nach einem der vorhergehenden Ansprüche,
**dadurch gekennzeichnet,**
**dass** ein auf das Wickelgut (D) wirkendes Ist-Moment auf ein Soll-Moment geregelt wird.

10. Verfahren nach einem der vorhergehenden Ansprüche,
**dadurch gekennzeichnet,**
**dass** die Ist-Wickelspannung des Wickelgutes (D) auf die Soll-Wickelspannung mittels einer Drehgeschwindigkeit (W1) des Wickelkörpers (1) und/oder durch eine Einstelleinheit (EE) geregelt wird.

## Claims

1. Method for winding a winding material (D) from a supply device (4) onto a winding body (1), having a non-circular cross section, of a winding machine (10), comprising the following steps:
providing (201) the winding material (D) from the supply device (4); and
winding (202) the winding material (D) provided by the supply device (4) onto the winding body (1) by way of at least one deflection roller (2), wherein an actual winding tension of the winding material (D) is set to a setpoint winding tension depending on a position-dependent compensation signal (k3), stored in a storage unit (40), for compensating a changeable free length (x), resulting from the non-circular cross section of the winding material (D), of the winding material (D) between the deflection roller (2) and the winding body (1);
**characterized in that**
the position-dependent compensation signal (k1) is calculated depending on a respective determined position (α) of the winding body (1) for a simulated winding cycle consisting of N rotations of the winding body (1) prior to the winding of the winding material (D) onto the winding body (1) and is stored in a table of the storage unit (40) ;
and **in that**
the calculated position-dependent compensation signal (k1) is filtered by way of a filter of a predetermined filter order prior to storage in the table, and the filtered position-dependent compensation signal (k2) is stored in the table of the storage unit (40).

2. Method according to Claim 1,
**characterized in that**
the actual winding tension of the winding material (D) is regulated to the setpoint winding tension depending on the position-dependent compensation signal (k3) for compensating the changeable free length (x) of the winding material (D) between the deflection roller (2) and the winding body (1).

3. Method according to Claim 1 or 2,
**characterized in that**
a polynomial table is used as table for storing the position-dependent compensation signal (k3).

4. Method according to one of Claims 1 to 3,
**characterized in that**
the respective position (α) of the winding body (1) for the simulated winding cycle consisting of the N rotations of the winding body (1) is determined depending on a winding length of the winding material (D) and a rotational speed (W1) of the winding body (1).

5. Method according to one of the preceding claims,
**characterized in that**
an FIR filter with a particular filter order of at least M and a finite impulse response is used as the filter.

6. Method according to one of the preceding claims,
**characterized in that**
the respective position (α) of the winding body (1) for the simulated winding cycle consisting of the N rotations of the winding body (1) is determined depending on the winding length of the winding material (D), on the rotational speed (W1) of the winding body (1) and the particular filter order of the filter in a predetermined resolution.

7. Method according to one of the preceding claims,
**characterized in that**,
when the filtered position-dependent compensation signal (k2) is stored in the table, a transient response of the filter is taken into account and a filter dead time of the filter is compensated.

8. Method according to one of the preceding claims,
**characterized in that**
the actual winding tension of the winding material (D) is regulated to the setpoint winding tension depending on the position-dependent compensation signal (k3) for setting an actual tensile force acting on the winding material (D) to a setpoint tensile force.

9. Method according to one of the preceding claims,
**characterized in that**
an actual torque acting on the winding material (D) is regulated to a setpoint torque.

10. Method according to one of the preceding claims,
**characterized in that**
the actual winding tension of the winding material (D) is regulated to the setpoint winding tension by way of a rotational speed (W1) of the winding body (1) and/or by a setting unit (EE).

## Revendications

1. Procédé d'enroulement d'un produit à enrouler (D) d'un dispositif d'alimentation (4) vers un corps d'enroulement (1) avec une section transversale de forme non circulaire d'une machine de bobinage (10), avec les étapes suivantes :
mise à disposition (201) du produit à enrouler (D) par le dispositif d'alimentation (4) et
enroulement (202) du produit à enrouler (D) mis à disposition par le dispositif d'alimentation (4) par l'intermédiaire d'au moins une poulie de renvoi (2) sur le corps d'enroulement (1), dans lequel une tension d'enroulement effective du produit à enrouler (D) est réglée à une tension d'enroulement de consigne en fonction d'un signal de compensation en fonction de la position (k3), enregistré dans une unité de mémoire (40), pour la compensation d'une longueur libre (x) du produit à enrouler (D), entre la poulie de renvoi (2) et le corps d'enroulement (1), variable du fait que la section transversale du produit à enrouler (D) n'est pas circulaire,
**caractérisé en ce que**
le signal de compensation en fonction de la position (k1) est calculé en fonction d'une position (α) déterminée respective du corps d'enroulement (1) pour un cycle d'enroulement simulé de N tours du corps d'enroulement (1) avant l'enroulement du produit à enrouler (D) sur le corps d'enroulement (1) et est enregistré dans une table de l'unité de mémoire (40),
et **en ce que**
le signal de compensation en fonction de la position (k1) calculé est filtré, avant l'enregistrement dans la table, au moyen d'un filtre d'un ordre de filtre prédéterminé et le signal de compensation en fonction de la position filtré (k2) est enregistré dans la table de l'unité de mémoire (40).

2. Procédé selon la revendication 1,
**caractérisé en ce que**
la tension d'enroulement effective du produit à enrouler (D) est réglée sur la tension d'enroulement de consigne en fonction du signal de compensation en fonction de la position (k3) afin de compenser la longueur libre variable (x) du produit à enrouler (D) entre la poulie de renvoi (2) et le corps d'enroulement (1).

3. Procédé selon la revendication 1 ou 2,
**caractérisé en ce que**
la table d'enregistrement du signal de compensation en fonction de la position (k3) utilisée est une table polynomiale.

4. Procédé selon l'une des revendications 1 à 3,
**caractérisé en ce que**
la position (α) respective du corps d'enroulement (1) pour le cycle d'enroulement simulé est déterminée à partir des N tours du corps d'enroulement (1) en fonction d'une longueur d'enroulement du produit à enrouler (D) et d'une vitesse de rotation (W1) du corps d'enroulement (1).

5. Procédé selon l'une des revendications précédentes,
**caractérisé en ce que**
le filtre utilisé est un filtre FIR avec un ordre de filtre déterminé d'au moins M et une réponse d'impulsion finale.

6. Procédé selon l'une des revendications précédentes,
**caractérisé en ce que**
la position (α) respective du corps d'enroulement (1) pour le cycle d'enroulement simulé est déterminée à partir des N tours du corps d'enroulement (1) en fonction de la longueur d'enroulement du produit à enrouler (D), de la vitesse de rotation (W1) du corps d'enroulement (1) et de l'ordre de filtre déterminé du filtre avec une résolution prédéterminée.

7. Procédé selon l'une des revendications précédentes,
**caractérisé en ce que**
lors de l'enregistrement du signal de compensation en fonction de la position filtré (k2) dans la table, une réponse transitoire du filtre est prise en compte et un temps mort de filtrage du filtre est compensé.

8. Procédé selon l'une des revendications précédentes,
**caractérisé en ce que**
la tension d'enroulement effective du produit à enrouler (D) est réglée à la tension d'enroulement de consigne en fonction du signal de compensation en fonction de la position (k3) pour le réglage d'une force de traction effective agissant sur le produit à enrouler (D) à une force de traction de consigne.

9. Procédé selon l'une des revendications précédentes,
**caractérisé en ce que**
un couple effectif agissant sur le produit à enrouler (D) est réglé à un couple de consigne.

10. Procédé selon l'une des revendications précédentes,
**caractérisé en ce que**
la tension d'enroulement effective du produit à enrouler (D) est réglée à la tension d'enroulement de consigne au moyen d'une vitesse de rotation (W1) du corps d'enroulement (1) et/ou par une unité de réglage (EE).
